# EUROPEAN PATENT SPECIFICATION

(11) **EP 4 330 743 B1**
(45) Date of publication and mention of the grant of the patent: **25.11.2026**
(21) Application number: 22726124.5
(22) Date of filing: 29.04.2022
(51) Int. Cl.: G02B 6/126

(54) **IMPROVED DEPOLARIZATION**
VERBESSERTE DEPOLARISATION
DÉPOLARISATION AMÉLIORÉE

(30) Priority: 30.04.2021 EP 21171490
(43) Date of publication of application: 06.03.2024
(73) Proprietor: Sentea NV, 9052 Gent (BE)
(72) Inventor: BOCKSTAELE, Ronny, 9052 Gent (BE); VERHAEGEN, Karsten, 9052 Gent (BE); SPUESENS, Thijs, 9052 Gent (BE)
(74) Representative: Nederlandsch Octrooibureau
(86) International application number: PCT/EP2022/061498
(87) International publication number: WO 2022/229394

(56) References cited:
- US-A1- 2004 165 808
- US-A1- 2017 227 710
- US-B2- 10 591 672
- US-B2- 10 809 460

## Description

### Field of the invention

The present invention relates, in general, to a depolarizer circuit. The present invention further relates to a system composing a depolarizer circuit. The present invention further relates to a use of a depolarizer circuit in an optical interrogator. The present invention further relates to a method for depolarizing light in a depolarizer circuit.

### Background art

Depolarizers are optical devices, required to convert polarized light into a pseudo-randomly polarized light, which is then called depolarized or scrambled light. While polarized light can be very useful in many photonic applications, some specific applications require non-polarized light for effective operation and accurate measurement, like Raman spectroscopy, Fourier transform infrared spectroscopy (FTIR) spectrometry, Raman amplifier, optical imaging, and optical fiber rotation sensing.

Several types of depolarizers are well known, such as Cornu depolarizer, Lyot depolarizer, Wedge depolarizer and Time-variable depolarizer. However, such depolarizers are very expensive and have very limited applications. Moreover, existing optical interrogators, e.g. including the afore-mentioned types of depolarizers, are bulky and, thus, impractical.

Ragheb et al. (2015) have described an integrated slanted angle Lyot depolarizer and an integrated Mach-Zehnder optical depolarizer in *"Design of an InGaAsP*/*InP compact integrated optical depolarizer".* However, such depolarizers require an active phase shifter and a feedback control signal for any general elliptically polarized light. Moreover, such depolarizers can entail interference effects.

Patent publication US 10,591,672 B2 discloses a photonic integrated circuit (PIC) comprising an input interlace adapted for receiving an optical input signal and splitting it into two distinct polarization modes and furthermore adapted for rotating the polarization of one of the modes for providing the split signals in a common polarization mode, The PIC also comprises a combiner adapted for combining the first mode signal and the second mode signal into a combined signal and a decohering means adapted for transforming at least one of the first mode signal and the second mode signal such that the first mode signal and the second mode signal are received by the combiner in a mutually incoherent state. As such, US 10,591,672 B2 discloses a PIC which delivers incoherent light in a common polarization mode which is then delivered to a processing component which is polarization dependent. Thus, the disclosed PIC is specifically not a depolarizer circuit.

Therefore, there is a need in the art to provide an improved depolarizer circuit and method for depolarizing light therein.

### Summary of the invention

It is an object of the present invention to provide an improved depolarizer circuit, which does not show one or more of the above-mentioned disadvantages.

According to the present invention, a depolarizer circuit is provided as claimed in claim 1.

According to the present invention, a system comprising a reflector and a depolarizer circuit as described above is provided.

According to the present invention, use of a depolarizer circuit as described above in an optical interrogator and/or an optical gyroscope is provided.

According to the present invention, a method of depolarizing light in a depolarizer circuit, preferably the depolarizer circuit as defined above is provided.

Advantageously, the present invention may ensure that interference effects on light from two light paths are minimized. Moreover, the present invention may provide improved incoherent coupling of light, which results in an effective depolarization of the light.

Additional and alternative objects of the present invention may be understood from the following.

### Brief description of the drawings

The present invention will be discussed in more detail below, with reference to the attached drawings, in which:
Fig. 1 depicts a schematic diagram of a system comprising a depolarizer circuit according to the present invention;
Fig. 2 depicts a schematic diagram of a depolarizer circuit according to the present invention;
Fig. 3 depicts a schematic diagram of a system comprising a depolarizer circuit according to the present invention; and
Figs. 4A and 4B depict schematic diagrams of depolarizer circuits according to the present invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

It is noted that the term "arms" (e.g., a first and a second arm) is used herein, and refer to waveguide branches in a depolarization circuit.

Embodiments of a depolarizer circuit are described herein.

In embodiments, at least one, preferably both, of the first and second delay line provides a phase delay being greater than the coherence of the light source.

In embodiments, one of the first and second delay lines provides a first phase delay at least twice a second phase delay provided by the other one of the first and second delay lines.

In embodiments, the phase delay difference relates to a difference in length and/or waveguide cross-sectional dimension and/or waveguide material.

According to the claimed invention, the depolarizer circuit is an integrated optical depolarizer circuit.

In embodiments, the coupler comprises a switch configured to switch light to a plurality of outputs of the depolarizer circuit.

In embodiments, at least one of the first and second delay lines is replaced with an active phase modulator.

According to the claimed invention, the depolarizer circuit further comprises: a further input waveguide configured to receive light; and may comprise a spectrometer configured to separate wavelengths of the received light.

In embodiments, the depolarizer circuit further comprises: a further splitter connected to the further input waveguide and configured to provide, at a first output of the third splitter, light in a first polarization state and, at a second output of the further splitter, light in a second polarization state; a third rotator connected to the first output of the further splitter and configured to rotate light received therefrom from the first polarization state to the second polarization state; a third delay line connected to the second output of the further splitter; and a coupler connected to the third rotator and the third delay line and configured to couple light received from each thereof and to provide the coupled light to the spectrometer.

In embodiments, at least one, preferably both, of the second and third delay lines provides a phase delay being greater than the coherence of the light source.

In embodiments, the second and third delay lines provide a further phase delay difference there between being at least twice a phase delay provided by the other of the second and third delay lines.

In embodiments, the depolarizer circuit further comprises: an input interface configured to couple the light source with the input waveguide; and an output interface configured to couple the output waveguide with the output of the depolarizer circuit.

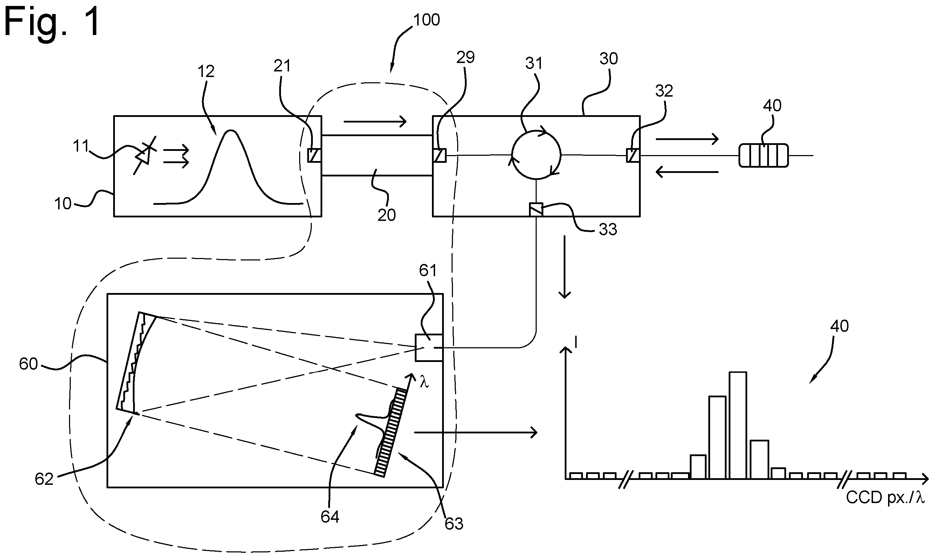

Embodiments of a depolarizer circuit are described with reference to Figs. 1-4B. The depolarization circuit may relate to any photonic circuit, such as an integrated photonic circuit (PIC) or an integrated depolarizer circuit, configured to at least partially depolarize light.

A first embodiment of a depolarization circuit 100 according to the present invention will be described with reference to Fig. 1. Fig. 1 shows a depolarizer circuit 100 comprising a first part 20 having an input interface 21 and an output interface 29. The depolarizer circuit 100 may comprise a second part 60 having a further input interface 61.

In Fig. 1, the first part 20 of the depolarizer circuit 100 is configured to receive light, e.g. light having an arbitrary state of polarization (SOP), through the input interface 21 and provide depolarized light to an output of the depolarizer circuit. In this embodiment, the second part 60 relates to a spectrometer having a dispersing element 62 and a detector 63. The detector 63 may be a Charge-Coupled Device (CCD) detector, e.g., an array detector in a Raman spectrometer. The dispersing element 62 may be a diffraction grating, Echelle grating, planar concave grating, arrayed waveguide grating (AWG), etc.

Fig. 1 further shows a system comprising the depolarizer circuit 100. The system comprises a reflector 40 configured to receive the depolarized light from the first part 20 of the depolarizer circuit 100 and reflect it back to the depolarizer circuit 100, preferably, to the second part 60 of the depolarizer circuit 100. The reflector 40 may be a distributed Bragg reflector, e.g. a Fiber Bragg Grating (FBG), configured to reflect particular wavelengths of light, while the other wavelengths of light are transmitted. The reflector 40 may be used as a sensor, e.g. sensitive to temperature. The system may be a measurement or data acquisition system, such as an optical interrogator, which is an optoelectronic instrument comprising an optical FBG sensor.

An example of a spectrometer-based FBG interrogator can be shown in Fig. 1, where the reflector 40 is an FBG illuminated by depolarized light, and where the second part 60 of the depolarizer circuit 100 is a spectrometer receiving a narrow wavelength band around a Bragg wavelength reflected and guided via an optical circulator 31 to the spectrometer. The spectrometer receives the reflected light through the further input interface 61, which may be an (input or output) aperture waveguide Alternatively, the further input interface 61 may be an entrance slit and/or collimator. The spectrometer may be an AWG spectrometer, such as the AWG in document WO2016005418A1, In this example, the AWG spectrometer comprises the dispersing element 62 which is an AWG and may be used for wavelength division multiplexing. Alternatively, the spectrometer is a diffraction grating spectrometer, and the dispersing element 62 in the spectrometer is a diffraction grating which images the sensor spectrum linearly onto the detector 63 being a CCD line array. The spectrometer may be configured to provide a spectral output 40, e.g., values of intensity as a function of CCD pixels per wavelength.

The system may comprise a circulator unit 30 having the optical circulator 31 configured for guiding from the output interface 29 of the first part 20 of the depolarizer circuit 100 (i.e., via a first port of the optical circulator 31) to the reflector 40 through an input-output interface 32 of the circulator unit 30 (i.e., via a second port of the optical circulator 31). Furthermore, the optical circulator 31 is configured to guide light reflected by the reflector 40 back through the input-output interface 32 of the circulator unit 30 (i.e., via a second port of the optical circulator 31) to the second part 60 of the depolarizer circuit 100 through an output interface 33 of the circulator unit 30 (i.e., via a third port of the optical circulator 31). The second part 60 of the depolarizer circuit 100 may receive the reflected light through the further input interface 61.

In embodiments, the depolarizer circuit 100 comprises a light source 10. In alternative embodiments, the system comprises the light source 10. The light source 10 may comprise a light emitting device 11, e.g., a light emitting diode (LED), super-luminescent diode (SLED or SLD), diode-pumped solid-state (DPSS) laser, laser diode (LD), micro LED (mLED), etc., emitting light 12, preferably at known wavelengths. The emitted light 12, preferably broadband light, may have an arbitrary or an unknown SOP. The light source 10 may have coherence properties, such as temporal coherence (e.g., coherence time and/or coherence length) and spatial coherence.

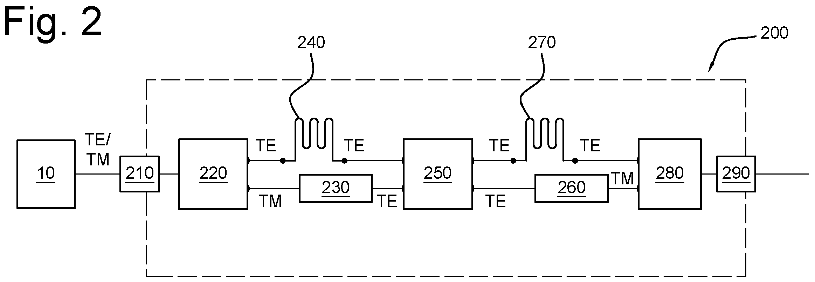

It is noted that the light source 10 described above with reference to Fig. 1 may be equivalent to the light source 10 in Figs. 2-4B.

A second embodiment of a depolarizer circuit 200 according to the present invention will be described with reference to Fig. 2. The depolarizer circuit 200 comprises an input waveguide configured to receive light from a light source 10; a splitter 220 connected to the input waveguide and configured to provide, at a first output of the splitter 220, light in a first polarization state and, at a second output of the splitter, light in a second polarization state; a first rotator 230 connected to the first output of the splitter 220 and configured to rotate light received therefrom from the first polarization state to the second polarization state; a first delay line 240 connected to the second output of the splitter 220; a coupler 250 comprising a first and second output and configured to couple the light received from the first rotator 230 and the first delay line 240; a second rotator 260 connected to the first output of the coupler 250 and configured to rotate light received therefrom back to the first polarization state; a second delay line 270 connected to the second output of the coupler; and a combiner 280 connected to the second rotator 260 and the second delay line 270 and configured to combine light received from each thereof as at least partially depolarized light, preferably fully depolarized light.

The depolarizer may comprise an input interface 210 and an output interface 290. The input interface 210 is configured to couple the light source 10 with an input waveguide. Furthermore, the output interface 290 is configured to couple the output waveguide with an output of the depolarizer circuit 200.

The input interface 21, the output interface 29 and/or the further input interface 61 may be, for example, edge coupler structures, such as fiber-chip edge couplers configured to couple light between planar waveguide circuits and optical fibers.

The input waveguide is configured to receive light from the light source 10. The light provided to the depolarizer circuit 200 may contain at least one of a transverse electric (TE) component and a transverse magnetic (TM) component. For example, the light may be provided in a superposition or a mix of two polarization states TE+TM. The amount of TE light as compared to TM light may vary in time, and is not necessarily split 50/50.

The light may be decomposed, e.g. by the input interface 21, into a TE and TM component in the input waveguide, where the ratio and phase depend on the SOP of the light incoming from the light source 10 and/or the input interface 210 and/or the input waveguide.

The splitter 220 may be a polarization splitter. As shown in Fig. 2, the input waveguide is provided between input interface 210 and splitter 220. The splitter is connected to the input waveguide and is configured to provide, at a first output of the splitter 220, light in a first polarization state, in this example, TM light. The splitter is further configured to provide, at a second output of the splitter 220, light in a second polarization state, in this example, TE light.

The first rotator 230 may be a polarization rotator. As shown in Fig. 2, a waveguide is provided between the first output of the splitter 220 and the first rotator 230. The first rotator 230 is connected to the first output of the splitter 220 and configured to rotate light received therefrom from the first polarization state to the second polarization state, in this example, rotating TM light to TE light.

As shown in Fig. 2, a waveguide is provided between the second output of the splitter 220 and the first delay line 240. The first delay line 240 is connected to the second output of the splitter 220 and configured to delay light received therefrom, in this example, TE light.

Furthermore, a first waveguide may be provided between an output of the first rotator 230 and a first input of the coupler 250 and a second waveguide is provided between an output of the first delay line 240 and a second input of the coupler 250. The coupler 250 is configured to receive, at a first input of the coupler 250, said rotated light from the first rotator 230, in this example, TE light. The coupler 250 is configured to receive, at a second input of the coupler 250, said delayed light from the first delay line 240, in this example, TE light. The coupler 250 is configured to couple the light received from the first rotator 230 and the first delay line 240 (i.e., said rotated light and said delayed light, respectively) and provide, at a first output and a second output of the coupler 250, said coupled light.

In Fig. 2, the coupler 250 is a directional coupler, particularly a 2x2 coupler, where light is combined at the first and second inputs of the 2x2 coupler and split at the first and second outputs of the 2x2 coupler, according to a coupling ratio, e.g. 10/90, 20/80, 30/70, 40/60, 50/50, 60/40, 70/30, 80/20, 90/10, or any other coupling ratio with values between the afore-mentioned values.

The second rotator 260 may be a polarization rotator. As shown in Fig. 2, a waveguide may be provided between the first output of the coupler 250 and the second rotator 260. The second rotator 260 is connected to the first output of the coupler 250 and configured to rotate light received therefrom back to the first polarization state, in this example, rotating from TE light back to TM light.

As shown in Fig. 2, a waveguide is provided between the second output of the coupler 250 and the second delay line 270. The second delay line 270 is connected to the second output of the coupler 250 and configured to delay light received therefrom, in this example, TE light.

The combiner 280 may be a polarization combiner. In Fig. 2, the combiner 280 is connected to the second rotator 260 and the second delay line 270 and configured to combine light received from each thereof as at least partially depolarized light. For example, polarization of light is reduced or dropped by 40% or more, 50% or more, 60% or more, 70% or more, 80% or more or 90% or more. It will be understood that the polarization of light may be reduced or dropped by a percentage value in a range between any two of the above mentioned percentages (e.g., 40-50%, 40-60%, ..., 40-90%, 50-60%, 50-70%, ..., 70-90%, 80-90%, etc.). Preferably, the combiner 280 is connected to the second rotator 260 and the second delay line 270 and configured to combine light received from each thereof as fully depolarized light.

Light from both waveguides branches (i.e., arms for the second rotator and/or delay line 260, 270) may be superimposed through the combiner 280. As this is done incoherently, there may be no distinct SOP and the output light can be considered to be depolarized.

As shown in Fig. 2, the depolarizer circuit 200 may comprise an output waveguide configured to provide the at least partially depolarized light, preferably fully depolarized light, to an output of the depolarizer circuit 200, e.g. through the output interface 290.

The depolarizer circuit 200 may comprise a waveguide connecting an output of the combiner 280 to another component of the depolarizer circuit 200, not necessarily to the output of the depolarizer circuit 200.

Either or both of the first and second rotators 230, 260 may be provided as a rib waveguide, the rib waveguide preferably including: a slab portion; and a ridge portion, which is disposed along a surface of the slab portion, wherein the slab portion has a first slab region whose width, as measured in a direction perpendicular to a guiding direction of the waveguide, increases from a first slab width to a second slab width along a first length, and wherein the ridge portion has a first ridge region whose width, as measured in the same direction as the slab widths, decreases from a first ridge width to a second ridge width along the same first length, such that the rotator is configured to rotate the polarization of light during its transmission through the rib waveguide.

Either or both of the first and second rotators 230, 260 may rotate light on a first waveguide branch (i.e., first arm), e.g., with respect to light on a second waveguide branch (i.e., second arm), by 15 degrees or more, 30 degrees or more, 45 degrees or more, 60 degrees or more, 75 degrees or more, 90 degrees or more, 105 degrees or more, 120 degrees or more, 135 degrees or more ... 180 degrees or more, etc.

Either or both of the first and second delay lines 240, 270 may be provided as a waveguide having delaying properties relating to, respectively, a first and second length, a first and a second set of cross-sectional dimensions (e.g., width, height, radius, diameter, circumference, etc.), and a first and second material. Either or both of the first and second delay lines 240, 270 may provide a phase delay based on a delaying property of the respective delay line 240, 270. It will be understood that a delaying property of a delay line relates to the delay line at a second arm of the depolarizer circuit 200 (e.g. between the second output of the splitter 220 and the second input of the coupler 250, and/or between the second output of the coupler 250 and the second input of the combiner 280) having at least one of a length, cross-sectional dimension, and material being different than the respective at least one of a length, cross-sectional dimension, and material of a first arm of the depolarizer circuit 200 (e.g. between the first output of the splitter 220 and the first input of the coupler 250, and/or between the first output of the coupler 250 and the first input of the combiner 280).

Therefore, a phase delay may relate to a difference in length and/or waveguide cross-sectional dimension and/or waveguide material between the first and second arms. For example, the length of the first delay line 240 on the second arm (e.g., between the second output of the splitter 220 and the second input arm of the coupler 250) is greater than the length of the first arm or of the rotator 230 thereon (e.g., between the first output of the splitter 220 and the first input arm of the coupler 250). In another example, a first circular waveguide having a larger diameter and/or a material with a higher refractive index (RI) than a second circular waveguide, would result in a higher phase delay at the first circular waveguide with respect to the second circular waveguide.

One of the first and second delay lines 240, 270 may provide a first phase delay at least twice a second phase delay provided by the other one of the first and second delay lines, otherwise, interference can occur. For example, the first delay line 240 may have a first length two times a second length of the second delay line 270. A length ratio of first length to second length may be, but not limited to: 1:2, 2:1, 1:3, 3;1, 1:4, 4:1, 1:5, 5:1, 2:4, 4:2, 2:5, 5:2, 2:6, 6:2, etc. Other examples can be understood by the skilled person, such as, the first delay line 240 may have a first material with a first RI half of a second RI of a second material of the second delay line 270. A phase delay ratio between the first and second lines 240, 270 may also be any of the afore-mentioned length ratios, but not limited thereto.

At least one of the first and second delay lines 240, 270 may provide a phase delay being greater than the coherence of the light source 10, particularly, at least one coherence property of the light source 10. For example, the first delay line 240 has a length greater than the coherence length of the light source 10 and/or the first delay line 240 provides a phase delay greater than the coherence time of the light source 10.

The phase delay difference may relate to a difference in length and/or waveguide cross-sectional dimension and/or waveguide material, as described above.

The first and second delay lines 240, 270 provide a phase delay difference there between being greater than or equal to a coherence of the light source 10, particularly, at least one coherence property of the light source 10. For example, the phase delay difference may be greater than or equal to a coherence time and/or a coherence length of the light source 10. As it will be understood, the phase delay difference may be a subtraction of the first phase delay with the second phase delay and vice versa, and/or a division of the first phase delay with the second phase delay and vice versa.

The first phase delay ensures that the light in both waveguide branches (i.e., arms for the first rotator and/or delay line 230, 240, as described above) becomes uncorrelated, such that said light can be incoherently coupled in the coupler 250 minimizing possible interference effects. It is important to note that without the coupler 250, input light, from the light source 10, with a linear SOP would otherwise only pass through one of the waveguides. The linear SOP would be maintained in that case. According to the claimed invention, the second delay line 270 ensures that the light in both waveguide branches (i.e., arms for the second rotator and/or delay line 260, 270, as described above) becomes decorrelated, such that said light can be incoherently combined in the combiner 280 minimizing possible interference effects.

Not according to the claimed invention, the first and second delay lines 240, 270 may be replaced with a first and second phase shifters. Preferably, the first and second delay lines 240, 270 may be passive components.

Alternatively, the first and second delay lines 240, 270 may be provided before or after the first and second rotators 230, 260, respectively. Here, a delay line and a rotator are connected to each other. For example, a first end of the first delay line 240 is connected to the first output of the splitter 220 and the other end of the first delay line 240 is connected to the first rotator 230, where the second output of the splitter 220 is directly connected to the second input of the coupler 250. Further in this example, a first end of the second delay line 270 is connected to the first output of the coupler 250 and the other end of the second delay line 260 is connected to the second rotator 270, where the second output of the coupler 250 is directly connected to the combiner 280. From the above example, the skilled person would understand how the first and second delay lines 240, 270 can be connected right after the first and second rotators 230, 260, respectively. More alternatively, the first and second rotators 230, 260 may include the first and second rotators 230, 260. Here, a rotator includes the delaying properties of a delay line. Even more alternatively, the first and second delay lines 240, 270 may include the first and second delay lines 240, 270.

The depolarizer circuit 200 may comprise an active phase modulator for modulating light received from an output of the combiner 280, e.g. at the output waveguide or at an output of the output interface 290. The active phase modulator may be an active phase and amplitude modulator configured to separate an input carrier into a plurality of phases. The phases may be amplified and modulated separately. Summing circuits in the active phase modulator may combine the phases into a single resultant output. The function of a modulator is to provide a signal exactly in amplitude but out of phase (e.g., 180 degrees) with an unwanted signal existing in the circuit. The result is that the unwanted signal is nulled out and cancelled. Unwanted signals may be, for example, signals from a nearby transmitter coupled into input circuits of a receiver, or distortion causing signals in transmitter circuits. The depolarizer circuit 200 may be said receiver and/or transmitter. Alternatively or additionally, the depolarizer circuit 200 may comprise an active phase modulator as a replacement of at least one of the first and second delay lines 240, 270. For example, a first active phase modulator may receive light from the splitter 220 and modulate the light according to a first modulation scheme (e.g., adding a first phase delay). A second active phase modulator may receive light from the coupler 250 and modulate the light according to a second modulation scheme (e.g., adding a second phase delay, which may be at least twice as the first phase delay).

The input interface 210 and the splitter 220 and/or the output interface 290 and the combiner 280 may be replaced with a two-dimensional (2D) grating coupler. The 2D grating coupler may allow one of the polarization states to be automatically rotated.

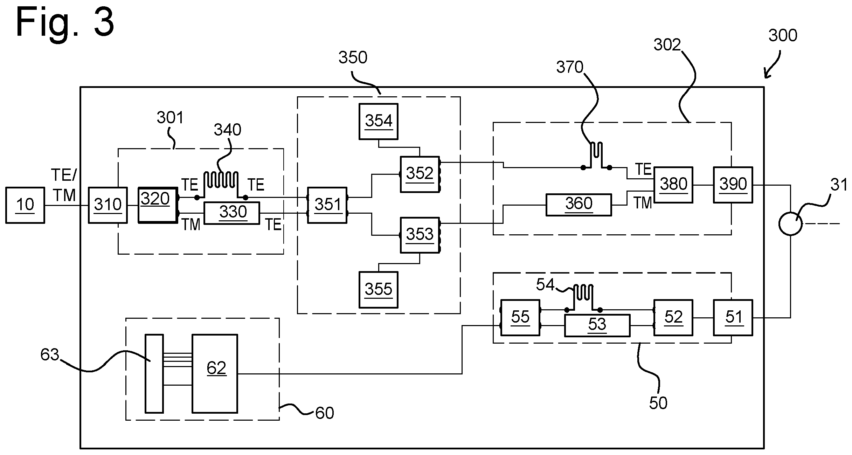

A third embodiment of a depolarization circuit 300 according to the present invention will be described with reference to Fig. 3. Fig. 3 shows a depolarizer circuit 300 comprising a first part 301, a second part 302 and a coupler 350 connecting the first and second parts 301, 302 to each other. The depolarizer circuit 100 may comprise a third part 50 having a further input interface 51.

Components 310, 320, 330, 340, 360, 370, 380, 390 of the first and second parts 301, 302 of the depolarizer circuit 300 in Fig. 3 correspond in many aspects and/or features to the components 210, 220, 230, 240, 260, 270, 280, 290 of the depolarizer circuit 200 in Fig. 2, respectively.

As shown in Fig. 3, the coupler 350 comprises a first and second inputs and a first and second outputs, which corresponds in many aspects and/or features to the coupler 250 of the second embodiment as shown in Fig. 2. In the third embodiment, the coupler 350 comprises one or more switches, preferably at least one switch, configured to switch light at a certain wavelength.

The coupler 350 may comprise a first switch 351 configured to switch said rotated and delayed light, received at the first and second inputs of the coupler 350, respectively, e.g. at a first wavelength. The coupler 350 may further comprise a second switch 352 configured to switch the switched light, received from a first output of the first switch 351, e.g. at a second wavelength and provide, at a first output of the coupler 350, light switched by the second switch 351. The coupler 350 may further comprise a third switch 353 configured to switch the switched light, received from a second output of the first switch 351, e.g. at a third wavelength and provide, at a second output of the coupler 350, light switched by the third switch 353. Fig. 3 shows the coupler 350 comprising three switches, particularly a 2x2 switch 351 and a first and second 1x4 switches 352, 353. The 2x2 switch 351 is connected, at a first and second inputs of the 2x2 switch 351, to the first and second inputs of the coupler 350, respectively, and, is thereby connected to the first rotator 330 and the first delay line 340, as described above. The 2x2 switch 351 is further connected, at a first and second outputs of the 2x2 switch 351, to an input of each of the first and second 1x4 switches 352, 353. The first and second 1x4 switches 352, 353 are connected, as a first and second output of the first and second 1x4 switches 352, 353, to the first and second outputs of the coupler 350, respectively, and, is thereby connected to the second rotator 360 and the second delay line 370, as described above. It will be understood that the second and third switches 352, 353 may be 1x2 switches or any other switches having one or more outputs. The first switch 351 may be replaced with a first coupler, e.g. a 2x2 coupler.

The second and third switches 352, 353 may be configured to switch light to different outputs of the second and third switches 352, 353 (i.e., the coupler 350), respectively to different outputs (e.g., optical fibers and/or output waveguides) of the depolarizer circuit 300. For example, the second and third switches 352, 353 are 1x4 switches that each have four outputs (eight in total) for outputting light to four outputs of the depolarizer circuit 300. In this example, the switched light may be output from four outputs of the second switch 352 to four second delay lines (e.g., similar to the second delay line 370) and from four outputs of the third switch 353 to four second rotators (e.g., similar to the second rotator 360), which are then delayed and rotated, respectively, and subsequently combined by four combiners (e.g., similar to the combiner 380) and output to four outputs of the depolarizer circuit 300 through four output interfaces (e.g., similar to the output interface 390) which may relate to four optical fibers.

The coupler 350 may further comprise at least one controller configured to control at least one of the one or more switches (e.g., one controller controlling multiple switches, one controller controlling one switch, etc.). For example, as shown in Fig. 3, the coupler 350 comprises a first and second controllers 354, 355 configured to control the first and second 1x4 switches 352, 353. For example, the first and second controllers 354, 355 may control the wavelength at which light is switched therein. In this example, the first and second 1x4 switches 352, 353 may switch light at a similar or different wavelength to each other, and/or a similar or different wavelength to the wavelength at which light is switched in the 2x2 switch 351, such as at a fraction of 1/2, 1/3, 1/4, 1/5, 1/6, 1/7, 1/8, etc. or at a multiple of 2, 3, 4, 5, 6, 7, 8, etc. In another example, the first and second controllers 354, 355 may control the amount of TE light as compared to TM light, such as a balance of polarization 50/50.

Fig. 3 shows the depolarizer circuit 300 comprising the third part 50 having a further input interface 51 which corresponds in many aspects and/or features to the further input interface 61 of the second embodiment as shown in Fig. 2. The further input interface 51 is configured to receive light, preferably from an external component as shown in Fig. 3. Alternatively, the light is received from within the depolarizer circuit 300, e.g., from the combiner 380.

The third part 50 may comprise a further splitter 52 connected to the further input waveguide and configured to provide, at a first output of the further splitter 52, light in a first polarization state of the two polarization states and, at a second output of the further splitter 52, light in a second polarization state of the two polarization states. The third part 50 may further comprise a third rotator 53 connected to the first output of the further splitter 52 and configured to rotate light received therefrom from the first polarization state to the second polarization state. The third part 50 may further comprise a third delay line 54 connected to the second output of the further splitter 52 and configured to delay light received therefrom. The third part 50 may further comprise a further coupler 55 connected to the third rotator 53 and the third delay line 54 and configured to couple light received from each thereof and to provide the coupled light to a measuring unit 60.

The further splitter 52, the third rotator 53 and the third delay line may correspond in many aspects and/or features to the splitter 320, the first and/or second rotator 330, 360, and the first and/or second delay line 340, 370, respectively.

The further coupler 55 may be configured to receive, at a first input of the further coupler 55, rotated light from the third rotator 53, in this example, TE or TM light, preferably TE light. The further coupler 55 is configured to receive, at a second input of the further coupler 55, delayed light from the third delay line 54, in this example, TE or TM light, preferably TE light. The further coupler 55 is configured to couple the light received from the third rotator 53 and the third delay line 54 (i.e., said rotated light and said delayed light, respectively) and provide, at one output of the further coupler 55, said coupled light.

As shown in Fig. 3, the depolarizer circuit 300 may comprise a third part 60 which receives light from the second part 50, preferably the coupled light from the further coupler 55. In this embodiment, the second and third parts 50, 60 are connected by a crossing and/or a waveguide. The third part 60 may relate to a measuring unit, preferably, a spectrometer having a dispersing element 62 and a detector 63, as described above in the first embodiment.

In the embodiment described above, where light is switched to different outputs of the depolarizer circuit 300, the depolarizer circuit 300 may further receive light (e.g., from an external component) at different inputs (e.g., optical fibers and/or further input waveguides). For example, given the second and third switches 352, 353 are 1x4 switches, and the depolarizer circuit 300 may comprise four further input interfaces (e.g. similar to the further input interface 51) configured to receive light from an output (e.g., a third port) of four optical circulators (e.g., similar to the optical circulator 31). The four further input interfaces may provide the received light to four further splitters (e.g., similar to the splitter 52), which respectively splits the light to four third delay lines (e.g., similar to the third delay line 54) and four third rotators (e.g., similar to the third rotator 53), which are then delayed and rotated, respectively, and subsequently combined by four further couplers (e.g., similar to the further coupler 55) and received by the third part 60 (e.g., via four crossings and/or waveguides).

It will be understood that any of the switches described herein may have one or more, preferably, a plurality of outputs or output channels, such as 2 or more, 3 or more, 4 or more, 5 or more, 6 or more, 7 or more, 8 or more, 9 or more, 10 or more, etc. In embodiments, a number of the output channels may be related to a number of outputs of the depolarizer circuit 300 or a number of fibers connected to the output(s) of the depolarizer circuit 300.

At least one, preferably all, of the first, second and third delay lines 340, 370, 54 may provide a phase delay being greater than the coherence of the light source 10, as described above with reference to the first and second delay lines 240, 270.

Any two of the first, second and third delay lines 340, 370, 54 may provide a further phase delay difference there between being at least twice a phase delay provided by the other of the two of the first, second and third delay lines 340, 370, 54. For example, a phase delay difference between the first and second delay lines 340, 370, the first and third delay lines 340, 54 or the second and third delay lines 370, 54. For example, the first delay line 340 may have a first length four times a second length of the second delay line 370 and two time a third length of the third delay line 54. A length ratio of first length to second length to third length, but not limited thereto: 1:2:4, 1:4:2, 2:1:4, 2:4:1, 4:1:2, 4:2:1, 1:3:9, ... 9:3:1, ..., 1:2:9, ..., 9:2:1, etc. Other examples can be understood by the skilled person, such as, the first delay line 340 may have a first material having a first RI one-fourth a second RI of a second material of the second delay line 370 and half a third RI of a third material of the third delay line 54. A phase delay ratio among the first, second and third lines 340, 370, 54 may also be any of the afore-mentioned length ratios, but not limited thereto.

The third delay line 54 may correspond in many aspects and/or features to the first and/or second delay lines 240, 270, 340, 370 as described above. For example, the third delay line 54 may comprise any one or more of the delaying properties described above with reference to the first and second delay lines 240, 270.

The third rotator 53 may correspond in many aspects and/or features to the first and/or second rotators 230, 260, 330, 360 as described above.

It will be understood that the depolarizer circuit 300 may comprise one or more second parts 302 and/or one or more third parts 50. For example, a number of the one or more second parts 302 and/or the one or more third parts 50 may relate to a number outputs of the second and third switches 352, 353.

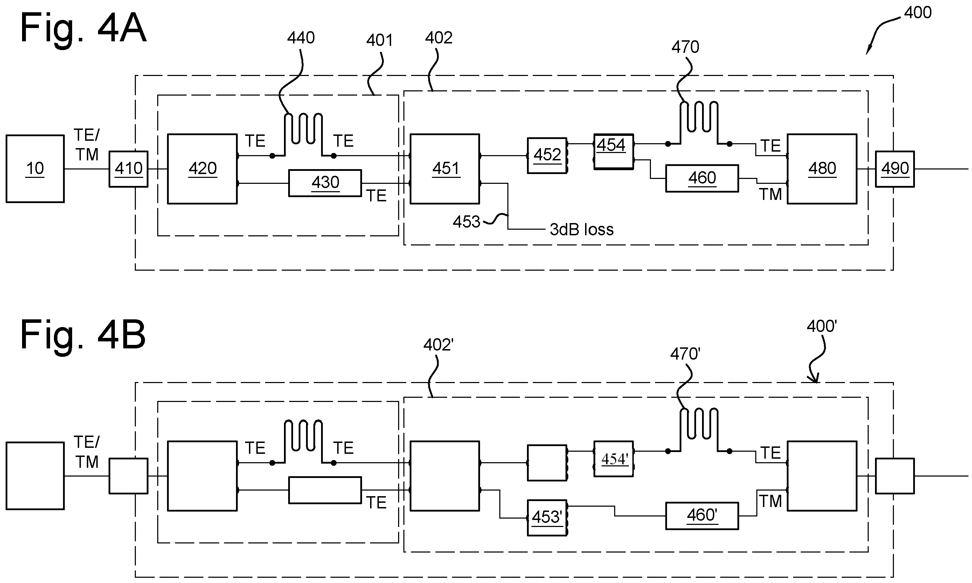

A fourth embodiment of a depolarization circuit 400 according to the present invention will be described with reference to Fig. 4A. Fig. 4A shows a depolarizer circuit 400 comprising a first part 401 and a second part 402.

Components 410, 420, 430, 440, 460, 470, 480, 490 of the first and second parts 401, 402 of the depolarizer circuit 400 in Fig. 4A respectively correspond in many aspects and/or features to the components 210, 220, 230, 240, 260, 270, 280, 290 of the depolarizer circuit 200 in Fig. 2 and/or the components 310, 320, 330, 340, 360, 370, 380, 390 of the depolarizer circuit 300 in Fig. 3.

A shown in Fig. 4A, coupling of the rotated and delayed light from the first rotator and delay line 430, 440 is performed in the second part 402. However, this embodiment is not limited to the coupling being performed in between the first and second parts 401, 402 as described in the second and third embodiments.

The depolarizer circuit 400 may comprise: a first coupler 451 configured to couple said rotated and delayed light received at a first and second inputs of the first coupler 451, respectively. The first coupler 451 provides, at a first and second outputs of the first coupler 451, the light coupled by the first coupler 451. The depolarizer circuit 400 may further comprise: a switch 452 configured to switch the coupled light, received from the second output of the first coupler 451, e.g. at a specific wavelength and provide the switched light at an output of the switch 452; and a second coupler 450 configured to receive, at an input of the second coupler 454, the switched light and couple said switched light. The second coupler 454 is configured to provide, at a first output and second output of the second coupler 450, the light coupled by the second coupler 450. In this embodiment, the light coupled by the first coupler 451 and provided at the first output of the first coupler 451 is considered to be lost signal power 453.

In this embodiment, the second rotator 460 and the second delay line 470 receive the light (In Fig. 4A being TE light) coupled by the second coupler 454, at the first and second outputs of the second coupler 454, respectively. In the example of Fig. 4A, the second rotator 460 rotates the TE light to TM light, such that that combiner 480 combines the TE and TM light received from the second delay line 470 and the second rotator 480, respectively. As will be understood, other polarization states may be provided to the components of the depolarizer circuit 400 (e.g., TM light to the first delay line 440 and TE light to the first rotator 430, TM light to both the second rotator and delay line 460, 470 etc.).

Fig. 4A shows the first coupler 451 as a first 2x2 coupler, where the coupled light provided at the first output of the first coupler 451 is a 3dB loss 453. Other values of power loss may be at most any one of 1dB, 2dB, 3dB, 4dB, 5dB, 6dB, 7dB, 8dB, etc. It will be understood that other values of power loss may be included in ranges of any two of the afore-mentioned values (e.g., 1-2dB, 1-3dB, ..., 2-3dB, 2-4dB, ..., 7-8dB, 7-9dB, etc.).

Fig. 4A shows the switch 452 as a 1x4 switch receiving the coupled light form the second output of the first 2x2 coupler, and providing at a first output of the 1x4 switch, switch light to a first input of the second coupler 454 being a second 2x2 coupler.

A further embodiment of a depolarization circuit 400' according to the present invention will be described with reference to Fig. 4B. Fig. 4B shows a depolarizer circuit 400' comprising a second part 402' correspond in many aspects and/or features to the depolarizer circuit 400 and the second part 402 of the fourth embodiment of Fig. 4A, therefore, only the differences will be described here for the sake of brevity.

In this embodiment, the light coupled by the first coupler 451 is provided at the first output of the first coupler 451 to a second switch 453'. A first switch 452 is configured to switch the coupled light, received from a first output of the first coupler 451, at a first wavelength and provide, at a first output of the first switch 452, light switched by the first switch 452 to a second coupler 454', as described in the fourth embodiment. The second switch 453' is configured to switch the coupled light, received from the second output of the first coupler 451, at a second wavelength and provide, at a first output of the second switch 453', light switched by the second switch 453' to the second rotator 460'. Furthermore, the second coupler 454' provides, at the second output of the second coupler 454', light coupled by the second coupler 454' to a second delay line 470'. Here, coupled light is not provided at the first output of the second coupler 454', as shown in Fig. 4B.

**Fig.** 4B shows the second switch 453' as a second 1x4 switch. The first and/or second switches 452, 453' may correspond in many aspects and/or features to the switches described in the third embodiment of Fig. 3, e.g. the first and second wavelengths of the switches 452, 453' may be different or similar and/or the first and second switches may be controlled by at least one of a first and a second controller, respectively, etc. For example, the first and/or second switches 452, 453' may output switched light to one or more outputs of the depolarizer circuit 400, 400'.

**As** will be understood, the system described with reference to Fig. 1 may comprise any one or combination of aspects and/or features of the depolarizer circuits 200, 300, 400, 400' of the second, third, fourth and further embodiments, respectively, described with reference to Figs. 2-4B. For example, the system may comprise the depolarizer circuit 300 and one or more optical circulators 31.

The depolarizer circuit 100, 200, 300, 400, 400' as described herein may be used in an optical interrogator and/or an optical gyroscope.

An optical interrogator may be an optoelectronic instrument, which allows the reading of optical Fiber Bragg Grating (FBG) sensors in static and/or dynamic monitoring applications. An optical gyroscope may be a fiber optic gyroscope (FOG), preferably an interferometric FOG, a resonant FOG (RFOG), a Stimulated Brillouin scattering FOG, etc.

The depolarizer circuit 100, 200, 300, 400, 400' may be used with a FBG sensor. FBG sensors are designed to reflect a specific wavelength based on temperature or strain. Due to imperfections in the fiber, the reflected wavelength from the FBG can be slightly different for TE or TM polarized light. Therefore, it can be important to couple in non-polarized light into the fiber, such that there is no polarization dependent wavelength shift.

The depolarizer circuit 100, 200, 300, 400, 400' may be used in (de)multiplexer applications, such as where a sharp separation of an input spectrum is desired.

The depolarizer circuit 100, 200, 300, 400, 400' may be used with or in a FOG sensor FOG in astronautics, including spacecraft, satellite, aircraft, etc., and/or in civil fields such as ship, automobile navigation, mine, and so on.

In embodiments, the use of the depolarizer circuit 100, 200, 300, 400, 400' relates to structural health monitoring. For example, bridges, dams, tunnels as well as buildings can be equipped with fiber optic sensors for continuous structural health monitoring. Fiber sensors mounted in or onto concrete or steel structures may be used to predict and detect small defects early on. Preventive maintenance can then be performed to avoid structural damage to the infrastructure.

In embodiments, the use of the depolarizer circuit 100, 200, 300, 400, 400' relates to bearing condition monitoring. Bearings may be equipped with fiber optic sensors to bring the benefits of fiber optic sensing to ships, trains, trucks and heavy construction equipment. Continuous load sensing improves the efficiency of rotating equipment, while lifetime prediction and early failure detection prevent damage to the bearing and more importantly to expensive surrounding parts like gearboxes and engines.

In embodiments, the use of the depolarizer circuit 100, 200, 300, 400, 400' relates to wind turbines. Fiber optic sensors may be installed on blades, bearings, gearbox, tower and jacket of wind turbines to predict, detect and prevent failures before they lead to costly repairs. Equally important fiber optic sensors embedded in the blades may be used to monitor and increase the efficiency of the turbine.

**A** method of depolarizing light in a depolarizer circuit, preferably, the depolarizer circuit 100, 200, 300, 400, 400' described above, comprises: receiving light, by an input waveguide, from a light source 10; splitting, by a splitter 220, 320, 420, the light into a first portion having a first polarization state and a second portion having a second polarization state; rotating, by a first rotator 230, 330, 430, the polarization of the first portion, such that it has the second polarization state; delaying, by a first delay line 240, 340, 440, the second portion; coupling, by a coupler 250, 350, 451, the first portion and second portion into a third portion and a fourth portion; rotating, by a second rotator 260, 360, 460, 460', the polarization of the third portion back to the first polarization state; delaying, by a second delay line 270, 370, 470, 470', the fourth portion; and combining, by a combiner 280, 380, 480, the third portion and the fourth portion as depolarized light.

Embodiments of methods will be understood from the aspects and/or features of the depolarizer circuit 100, 200, 300, 400, 400' described above.

Although the present invention has been described above with reference to certain embodiments thereof, it will be evident that various modifications and changes may be made to these embodiments without departing from the broader scope of the present invention, as defined by the appended claims.

## Claims

1. A depolarizer circuit for light having a coherence, comprising:
an input waveguide configured to receive light having a coherence;
a splitter (220) connected to the input waveguide and configured to provide, at a first output of the splitter (220), light in a first polarization state and, at a second output of the splitter (220), light in a second polarization state;
a first rotator (230) connected to the first output of the splitter (220) and configured to rotate light received therefrom from the first polarization state to the second polarization state;
a first delay line (240) connected to the second output of the splitter (220);
a coupler (250) comprising a first and second output and configured to couple the light received from the first rotator (230) and the first delay line (240);
**characterized by**:
a second rotator (260) connected to the first output of the coupler (250) and configured to rotate light received therefrom back to the first polarization state;
a second delay line (270) connected to the second output of the coupler (250); and
a combiner (280) connected to the second rotator (260) and the second delay line (270) and configured to combine light received from each thereof as depolarized light,
wherein the first and second delay lines (240, 270) provide a phase delay difference there between being greater than or equal to the coherence of the light received by the input waveguide, so that the light from the second rotator (260) and from the second delay line (270) arriving in the combiner (280) is uncorrelated.

2. The depolarizer circuit according to claim 1, wherein at least one, preferably both, of the first and second delay line (240, 270) provides a phase delay being greater than the coherence of the light received by the input waveguide.

3. The depolarizer circuit according to claim 1 or claim 2, wherein one of the first and second delay lines (240, 270) provides a first phase delay at least twice a second phase delay provided by the other one of the first and second delay lines (240, 270).

4. The depolarizer circuit according to claims 1-3, wherein the phase delay difference relates to a difference in length and/or waveguide cross-sectional dimension and/or waveguide material.

5. The depolarizer circuit according to claims 1-4, wherein the depolarizer circuit is an integrated optical depolarizer circuit.

6. The depolarizer circuit according to claims 1-5, wherein the coupler (250) comprises a switch configured to switch light to a plurality of outputs of the depolarizer circuit.

7. The depolarizer circuit according to claims 1-6, further comprising an active phase modulator configured to modulate the combined light.

8. The depolarizer circuit according to claims 1-7, further comprising:
a further input waveguide configured to receive light; and
a spectrometer configured to separate wavelengths of the received light.

9. The depolarizer circuit according to claim 8, further comprising:
a further splitter (52) connected to the further input waveguide and configured to provide, at a first output of the further splitter (52), light in a first polarization state and, at a second output of the further splitter (52), light in a second polarization state;
a third rotator (53) connected to the first output of the further splitter (52) and configured to rotate light received therefrom from the first polarization state to the second polarization state;
a third delay line (54) connected to the second output of the further splitter (52); and
a further coupler (55) connected to the third rotator (53) and the third delay line (54) and configured to couple light received from each thereof and to provide the coupled light to the spectrometer.

10. The depolarizer circuit according to claim 9, wherein at least one, preferably both, of the second and third delay lines (270, 54) provides a phase delay being greater than the coherence of the light received by the input waveguide.

11. The depolarizer circuit according to claim 9 or claim 10, wherein the second and third delay lines (270, 54) provide a further phase delay difference there between being at least twice a phase delay provided by the other of the second and third delay lines (270, 54).

12. The depolarizer circuit according to claims 1-11, further comprising:
an input interface (210) configured to couple the light source (10) with the input waveguide; and
an output interface (290) configured to couple the output waveguide with the output of the depolarizer circuit.

13. A system comprising a reflector (40) and a depolarizer circuit according to claims 1-12, wherein the reflector (40) is configured to receive depolarized light from an output of the depolarizer and to reflect light to an input of the depolarizer circuit.

14. Use of a depolarizer circuit according to claims 1-12 in an optical interrogator and/or an optical gyroscope.

15. A method of depolarizing light having a coherence in a depolarizer circuit, preferably the depolarizer circuit according to claims 1-12, comprising the steps of:
receiving light, by an input waveguide;
splitting, by a splitter, the light into a first portion having a first polarization state and a second portion having a second polarization state;
rotating, by a first rotator, the polarization of the first portion, such that it has the second polarization state;
delaying, by a first delay line, the second portion;
coupling, by a coupler, the first portion and second portion into a third portion and a fourth portion;
the method being **characterized by**
rotating, by a second rotator, the polarization of the third portion back to the first polarization state;
delaying, by a second delay line, the fourth portion; and
combining, by a combiner, the third portion and the fourth portion as depolarized light,
wherein the method further comprises providing a phase delay difference between the first and second delay lines, the phase delay difference being greater than or equal to the coherence of the light received by the input waveguide, so that the light from the second rotator (260) and from the second delay line (270) arriving in the combiner (280) is uncorrelated.

## Patentansprüche

1. Depolarisatorschaltkreis für Licht mit einer Kohärenz, umfassend:
einen Eingangswellenleiter, der dazu konfiguriert ist, Licht mit einer Kohärenz zu empfangen;
einen Strahlteiler (220), der mit dem Eingangswellenleiter verbunden und dazu konfiguriert ist, an einem ersten Ausgang des Strahlteilers (220) Licht in einem ersten Polarisationszustand und an einem zweiten Ausgang des Strahlteilers (220) Licht in einem zweiten Polarisationszustand bereitzustellen;
einen ersten Polarisationsdreher (230), der mit dem ersten Ausgang des Strahlteilers (220) verbunden und dazu konfiguriert ist, von diesem empfangenes Licht vom ersten Polarisationszustand in den zweiten Polarisationszustand zu drehen;
eine erste Verzögerungsleitung (240), die mit dem zweiten Ausgang des Strahlteilers (220) verbunden ist;
einen Koppler (250), der einen ersten und zweiten Ausgang umfasst und dazu konfiguriert ist, das vom ersten Polarisationsdreher (230) und von der ersten Verzögerungsleitung (240) empfangene Licht zu koppeln;
**gekennzeichnet durch**:
einen zweiten Polarisationsdreher (260), der mit dem ersten Ausgang des Kopplers (250) verbunden und dazu konfiguriert ist, von diesem empfangenes Licht zurück in den ersten Polarisationszustand zu drehen;
eine zweite Verzögerungsleitung (270), die mit dem zweiten Ausgang des Kopplers (250) verbunden ist; und
einen Kombinator (280), der mit dem zweiten Polarisationsdreher (260) und der zweiten Verzögerungsleitung (270) verbunden und dazu konfiguriert ist, von jedem davon empfangenes Licht als depolarisiertes Licht zu kombinieren,
wobei die erste und zweite Verzögerungsleitung (240, 270) einen Phasenverzögerungsunterschied zwischen sich bereitstellen, der größer als oder gleich der Kohärenz des vom Eingangswellenleiter empfangenen Lichts ist, sodass das Licht vom zweiten Polarisationsdreher (260) und von der zweiten Verzögerungsleitung (270), das im Kombinator (280) ankommt, unkorreliert ist.

2. Depolarisatorschaltkreis nach Anspruch 1, wobei mindestens eine, vorzugsweise beide, der ersten und zweiten Verzögerungsleitung (240, 270) eine Phasenverzögerung bereitstellt, die größer als die Kohärenz des vom Eingangswellenleiter empfangenen Lichts ist.

3. Depolarisatorschaltkreis nach Anspruch 1 oder Anspruch 2, wobei eine der ersten und zweiten Verzögerungsleitungen (240, 270) eine erste Phasenverzögerung bereitstellt, die mindestens doppelt so groß wie eine zweite Phasenverzögerung ist, die von der anderen der ersten und zweiten Verzögerungsleitungen (240, 270) bereitgestellt wird.

4. Depolarisatorschaltkreis nach einem der Ansprüche 1-3, wobei der Phasenverzögerungsunterschied einen Unterschied in der Länge und/oder der Wellenleiterquerschnittsabmessung und/oder dem Wellenleitermaterial betrifft.

5. Depolarisatorschaltkreis nach einem der Ansprüche 1-4, wobei der Depolarisatorschaltkreis ein integriert-optischer Depolarisatorschaltkreis ist.

6. Depolarisatorschaltkreis nach einem der Ansprüche 1-5, wobei der Koppler (250) einen Schalter umfasst, der dazu konfiguriert ist, Licht zu einer Mehrzahl von Ausgängen des Depolarisatorschaltkreises zu schalten.

7. Depolarisatorschaltkreis nach einem der Ansprüche 1-6, ferner umfassend einen aktiven Phasenmodulator, der dazu konfiguriert ist, das kombinierte Licht zu modulieren.

8. Depolarisatorschaltkreis nach einem der Ansprüche 1-7, ferner umfassend:
einen weiteren Eingangswellenleiter, der dazu konfiguriert ist, Licht zu empfangen; und
ein Spektrometer, das dazu konfiguriert ist, Wellenlängen des empfangenen Lichts zu trennen.

9. Depolarisatorschaltkreis nach Anspruch 8, ferner umfassend:
einen weiteren Strahlteiler (52), der mit dem weiteren Eingangswellenleiter verbunden und dazu konfiguriert ist, an einem ersten Ausgang des weiteren Strahlteilers (52) Licht in einem ersten Polarisationszustand und an einem zweiten Ausgang des weiteren Strahlteilers (52) Licht in einem zweiten Polarisationszustand bereitzustellen;
einen dritten Polarisationsdreher (53), der mit dem ersten Ausgang des weiteren Strahlteilers (52) verbunden und dazu konfiguriert ist, von diesem empfangenes Licht vom ersten Polarisationszustand in den zweiten Polarisationszustand zu drehen;
eine dritte Verzögerungsleitung (54), die mit dem zweiten Ausgang des weiteren Strahlteilers (52) verbunden ist; und
einen weiteren Koppler (55), der mit dem dritten Polarisationsdreher (53) und der dritten Verzögerungsleitung (54) verbunden und dazu konfiguriert ist, von jedem davon empfangenes Licht zu koppeln und das gekoppelte Licht an das Spektrometer bereitzustellen.

10. Depolarisatorschaltkreis nach Anspruch 9, wobei mindestens eine, vorzugsweise beide, der zweiten und dritten Verzögerungsleitung (270, 54) eine Phasenverzögerung bereitstellt, die größer als die Kohärenz des vom Eingangswellenleiter empfangenen Lichts ist.

11. Depolarisatorschaltkreis nach Anspruch 9 oder Anspruch 10, wobei die zweite und dritte Verzögerungsleitung (270, 54) einen weiteren Phasenverzögerungsunterschied zwischen sich bereitstellen, der mindestens doppelt so groß wie eine Phasenverzögerung ist, die von der anderen der zweiten und dritten Verzögerungsleitungen (270, 54) bereitgestellt wird.

12. Depolarisatorschaltkreis nach einem der Ansprüche 1-11, ferner umfassend:
eine Eingabeschnittstelle (210), die dazu konfiguriert ist, die Lichtquelle (10) mit dem Eingangswellenleiter zu koppeln; und
eine Ausgabeschnittstelle (290), die dazu konfiguriert ist, den Ausgangswellenleiter mit dem Ausgang des Depolarisatorschaltkreises zu koppeln.

13. System, umfassend einen Reflektor (40) und einen Depolarisatorschaltkreis nach einem der Ansprüche 1-12, wobei der Reflektor (40) dazu konfiguriert ist, depolarisiertes Licht von einem Ausgang des Depolarisators zu empfangen und Licht zu einem Eingang des Depolarisatorschaltkreises zu reflektieren.

14. Verwendung eines Depolarisatorschaltkreises nach einem der Ansprüche 1-12 in einer optischen Abfragevorrichtung und/oder einem optischen Kreisel.

15. Verfahren zum Depolarisieren von Licht mit einer Kohärenz in einem Depolarisatorschaltkreis, vorzugsweise dem Depolarisatorschaltkreis nach einem der Ansprüche 1-12, umfassend die Schritte:
Empfangen von Licht durch einen Eingangswellenleiter;
Aufteilen, durch einen Strahlteiler, des Lichts in einen ersten Anteil mit einem ersten Polarisationszustand und einen zweiten Anteil mit einem zweiten Polarisationszustand;
Drehen, durch einen ersten Polarisationsdreher, der Polarisation des ersten Anteils, sodass dieser den zweiten Polarisationszustand aufweist;
Verzögern, durch eine erste Verzögerungsleitung, des zweiten Anteils;
Koppeln, durch einen Koppler, des ersten Anteils und des zweiten Anteils in einen dritten Anteil und einen vierten Anteil;
**gekennzeichnet durch**
Drehen, durch einen zweiten Polarisationsdreher, der Polarisation des dritten Anteils zurück in den ersten Polarisationszustand;
Verzögern, durch eine zweite Verzögerungsleitung, des vierten Anteils; und
Kombinieren, durch einen Kombinator, des dritten Anteils und des vierten Anteils als depolarisiertes Licht,
wobei das Verfahren ferner Bereitstellen eines Phasenverzögerungsunterschieds zwischen der ersten und zweiten Verzögerungsleitung umfasst, wobei der Phasenverzögerungsunterschied größer als oder gleich der Kohärenz des vom Eingangswellenleiter empfangenen Lichts ist, sodass das Licht vom zweiten Polarisationsdreher (260) und von der zweiten Verzögerungsleitung (270), das im Kombinator (280) ankommt, unkorreliert ist.

## Revendications

1. Circuit dépolariseur pour une lumière ayant une cohérence, comprenant :
un guide d'ondes d'entrée configuré pour recevoir de la lumière ayant une cohérence ;
un séparateur (220) qui est connecté au guide d'ondes d'entrée et configuré pour fournir, à une première sortie du séparateur (220), de la lumière dans un premier état de polarisation et, à une seconde sortie du séparateur (220), de la lumière dans un second état de polarisation ;
un premier rotateur (230) qui est connecté à la première sortie du séparateur (220) et configuré pour faire pivoter la lumière reçue de celui-ci du premier état de polarisation vers le second état de polarisation ;
une première ligne à retard (240) qui est connectée à la seconde sortie du séparateur (220) ;
un coupleur (250) comprenant une première et une seconde sortie et configuré pour coupler la lumière reçue du premier rotateur (230) et de la première ligne à retard (240) ;
**caractérisé par** :
un second rotateur (260) qui est connecté à la première sortie du coupleur (250) et configuré pour faire pivoter en retour la lumière reçue de celui-ci vers le premier état de polarisation ;
une seconde ligne à retard (270) qui est connectée à la seconde sortie du coupleur (250) ; et
un combineur (280) qui est connecté au second rotateur (260) et à la seconde ligne à retard (270) et configuré pour combiner la lumière reçue de chacun d'eux en tant que lumière dépolarisée,
dans lequel les première et seconde lignes à retard (240, 270) fournissent une différence de retard de phase entre elles qui est supérieure ou égale à la cohérence de la lumière reçue par le guide d'ondes d'entrée, de sorte que la lumière provenant du second rotateur (260) et de la seconde ligne à retard (270) arrivant dans le combineur (280) est non corrélée.

2. Circuit dépolariseur selon la revendication 1, dans lequel au moins l'une, de préférence les deux, des première et seconde lignes à retard (240, 270) fournit un retard de phase supérieur à la cohérence de la lumière reçue par le guide d'ondes d'entrée.

3. Circuit dépolariseur selon la revendication 1 ou la revendication 2, dans lequel l'une des première et seconde lignes à retard (240, 270) fournit un premier retard de phase au moins deux fois supérieur à un second retard de phase fourni par l'autre des première et seconde lignes à retard (240, 270).

4. Circuit dépolariseur selon l'une quelconque des revendications 1-3, dans lequel la différence de retard de phase est liée à une différence de longueur et/ou de dimension de section transversale du guide d'ondes et/ou de matériau du guide d'ondes.

5. Circuit dépolariseur selon l'une quelconque des revendications 1-4, dans lequel le circuit dépolariseur est un circuit dépolariseur optique intégré.

6. Circuit dépolariseur selon l'une quelconque des revendications 1-5, dans lequel le coupleur (250) comprend un commutateur configuré pour commuter la lumière vers une pluralité de sorties du circuit dépolariseur.

7. Circuit dépolariseur selon l'une quelconque des revendications 1-6, comprenant en outre un modulateur de phase actif configuré pour moduler la lumière combinée.

8. Circuit dépolariseur selon l'une quelconque des revendications 1-7, comprenant en outre :
un guide d'ondes d'entrée supplémentaire configuré pour recevoir de la lumière ; et
un spectromètre configuré pour séparer les longueurs d'onde de la lumière reçue.

9. Circuit dépolariseur selon la revendication 8, comprenant en outre :
un séparateur supplémentaire (52) qui est connecté au guide d'ondes d'entrée supplémentaire et configuré pour fournir, à une première sortie du séparateur supplémentaire (52), de la lumière dans un premier état de polarisation et, à une seconde sortie du séparateur supplémentaire (52), de la lumière dans un second état de polarisation ;
un troisième rotateur (53) qui est connecté à la première sortie du séparateur supplémentaire (52) et configuré pour faire pivoter la lumière reçue de celui-ci du premier état de polarisation vers le second état de polarisation ;
une troisième ligne à retard (54) qui est connectée à la seconde sortie du séparateur supplémentaire (52) ; et
un coupleur supplémentaire (55) qui est connecté au troisième rotateur (53) et à la troisième ligne à retard (54) et configuré pour coupler la lumière reçue de chacun d'eux et pour fournir la lumière couplée au spectromètre.

10. Circuit dépolariseur selon la revendication 9, dans lequel au moins l'une, de préférence les deux, des seconde et troisième lignes à retard (270, 54) fournit un retard de phase supérieur à la cohérence de la lumière reçue par le guide d'ondes d'entrée.

11. Circuit dépolariseur selon la revendication 9 ou la revendication 10, dans lequel les seconde et troisième lignes à retard (270, 54) fournissent une différence de retard de phase supplémentaire entre elles qui est au moins deux fois supérieure à un retard de phase fourni par l'autre des seconde et troisième lignes à retard (270, 54).

12. Circuit dépolariseur selon l'une quelconque des revendications 1-11, comprenant en outre :
une interface d'entrée (210) configurée pour coupler la source de lumière (10) avec le guide d'ondes d'entrée ; et
une interface de sortie (290) configurée pour coupler le guide d'ondes de sortie avec la sortie du circuit dépolariseur.

13. Système comprenant un réflecteur (40) et un circuit dépolariseur selon l'une quelconque des revendications 1-12, dans lequel le réflecteur (40) est configuré pour recevoir de la lumière dépolarisée provenant d'une sortie du dépolariseur et pour réfléchir de la lumière vers une entrée du circuit dépolariseur.

14. Utilisation d'un circuit dépolariseur selon l'une quelconque des revendications 1-12 dans un interrogateur optique et/ou un gyroscope optique.

15. Procédé de dépolarisation de lumière ayant une cohérence dans un circuit dépolariseur, de préférence le circuit dépolariseur selon l'une quelconque des revendications 1-12, comprenant les étapes de :
réception de la lumière, par un guide d'ondes d'entrée ;
division, par un séparateur, de la lumière en une première partie ayant un premier état de polarisation et une seconde partie ayant un second état de polarisation ;
rotation, par un premier rotateur, de la polarisation de la première partie, de telle sorte qu'elle ait le second état de polarisation ;
retard, par une première ligne à retard, de la seconde partie ;
couplage, par un coupleur, de la première partie et de la seconde partie en une troisième partie et une quatrième partie ;
le procédé étant **caractérisé par**
rotation, par un second rotateur, de la polarisation de la troisième partie en retour vers le premier état de polarisation ;
retard, par une seconde ligne à retard, de la quatrième partie ; et
combinaison, par un combineur, de la troisième partie et de la quatrième partie en tant que lumière dépolarisée,
dans lequel le procédé comprend en outre la fourniture d'une différence de retard de phase entre les première et seconde lignes à retard, la différence de retard de phase étant supérieure ou égale à la cohérence de la lumière reçue par le guide d'ondes d'entrée, de sorte que la lumière provenant du second rotateur (260) et de la seconde ligne à retard (270) arrivant dans le combineur (280) est non corrélée.
